Europäisches Patentamt

European Patent Office

Office européen des brevets

(11) Publication number: **0 086 856**
**B1**

(12) **EUROPEAN PATENT SPECIFICATION**

(45) Date of publication of patent specification: **23.07.86**

(21) Application number: **82101278.8**

(22) Date of filing: **19.02.82**

(51) Int. Cl.⁴: **A 23 G 3/30**

(54) **Center-filled chewing gums, a sugarless liquid fill for same and a process for preparing them.**

(43) Date of publication of application:
**31.08.83 Bulletin 83/35**

(45) Publication of the grant of the patent:
**23.07.86 Bulletin 86/30**

(84) Designated Contracting States:
**BE CH DE FR GB IT LI**

(56) References cited:
**DE-A-2 850 989**
**GB-A-1 469 031**
**US-A-3 894 154**
**US-A-4 156 740**
**US-A-4 250 196**
**US-A-4 292 329**
**US-A-4 316 915**

(73) Proprietor: **NABISCO BRANDS INC.**
**Nabisco Brands Plaza**
**Parsippany New Jersey 07054 (US)**

(72) Inventor: **Friello, Dominick R.**
**King Street**
**Danbury Connecticut (US)**
Inventor: **Parker, Ellery**
**11 Pine Avenue**
**Johnstown, N.Y. (US)**
Inventor: **Mackay, Donald A.M.**
**135 Deerfield Lane**
**Pleasantville, N.Y. (US)**
Inventor: **Cherukuri, Subraman Rao**
**3 Mendes Road**
**Danbury Connecticut (US)**

(74) Representative: **Brauns, Hans-Adolf, Dr. rer. nat.**
**et al**
**Hoffmann, Eitle & Partner, Patentanwälte**
**Arabellastrasse 4**
**D-8000 Munich 81 (DE)**

Courier Press, Leamington Spa, England.

# 0 086 856

**Description**

U.S. Patent No. 2,894,154 to Graff et al discloses a center-filled chewing gum which includes as a liquid fill an aqueous solution having a dissolved solids portion, and a humectant for retarding increase in viscosity of the center fill. The dissolved solids portion may include invert sugar, sucrose and glucose, while the humectant is glycerine.

British Patent No. 1,469,031 discloses a center-filled chewing gum similar to that disclosed in U.S. Patent No. 3,894,154 except that in addition to glycerine, the humectant may be polylimonene, sorbitol solution, lecithin, dextrose, gum arabic, glyceryl monostearate, polyethylene glycol or propylene glycol.

U.S. Patent No. 4,156,740 to Glass et al discloses a center-filled chewing gum which includes in both the chewing gum shell and the center fill A. from 0.4 to 1 part by weight of a natural or synthetic gum, namely, carboxymethyl cellulose, pectin, propylene glycol, alginates, agar or gum tragacanth; B. from 50 to 84 parts by weight of a glycerin humectant; and C. from 15 to 49.6 parts by weight of an additional water-miscible humectant ingredient which is sorbitol solution or sorbitol solution and propylene glycol.

In accordance with the present invention, there is provided a center-filled chewing gum piece which includes an enclosed cavity containing a liquid fill formed of from 94 to 99.5% by weight of a glycerin dispersion containing from about 0.5 to about 6% by weight of a thickening agent, and optionally other sweeteners and flavors.

Surprisingly, it has been found that the substantially all glycerin center fill containing a small amount of thickener retains its liquidity in the center fill for surprisingly long periods of time while providing a pleasant sweet taste. Thus, the center-filled chewing gum of the invention will have an extended shelf-life.

As indicated, the liquid fill will be formed of substantially all glycerin. The glycerin which may be employed may be commercial grade, that is, it may contain 1 to 4% bound up water.

The glycerin functions as a sweetener and vehicle for flavor and/or other sweeteners and thus is particularly suitable for use in a sugarless liquid fill which will usually be employed in a sugar-free center-filled chewing gum.

The thickening agent or thickener is employed to increase the viscosity of the glycerin which itself is stable and comprises the center fill. The thickening agent will usually not dissolve in the center fill (glycerin) but will only appear to dissolve by forming a colloidal dispersion with the glycerin.

The thicknening agent will be present in the center fill in an amount within the range of from 0.5 to 6% by weight based on the total content of the center fill, and preferably from 1 to 3% by weight of the center fill.

Examples of thickening agents which may be employed in the center fill together with glycerin include, but are not limited to, synthetic or natural gums, such as carboxymethyl cellulose, pectins, alginates, namely, esters of alginic acid, such as propylene glycol alginate, agar, gum tragacanth, hydroxypropyl cellulose, hydroxyethyl-cellulose, gelatin, and the like. The preferred thickening agent for use herein is carboxymethyl cellulose, which may be in the form of sodium carboxymethyl cellulose, and may have a viscosity of from 400 to 4,500 mPas at 1% concentration, and more preferably a viscosity of 1000—3000 at 1% concentration such as CMC 7HF or CMC 7MF (available from Hercules, Inc.).

In addition, the center fill may contain flavor, for example, in the form of flavor oil, in an amount of from 0.10 to 0.75% by weight, and preferably, from 0.10 to 0.50% by weight.

Where the liquid fill is to include additional sweetener, beside glycerin, such sweetener may comprise a sugar sweetener, a sugar alcohol, or other non-sugar sweeteners. In the case where the additional sweetener is a sugar, such sugar may be present in an amount of from 2 to 15% by weight, and preferably, from 3 to 10% by weight; where the additional sweetener is a sugar alcohol such as sorbitol, and/or mannitol or xylitol, the sugar alcohol may be present in an amount within the range of from 5 to 30% by weight, and preferably, from 3 to 15% by weight; where the additional sweetener is an artificial sweetener such as, for example, aspartame or Acesulfame-K (Hoechst), cyclamate, or other sweetener as described hereinafter, the artificial sweetener may be present in an amount of from 0.05 to 0.35% by weight, and preferably, from 0.03 to 0.25% by weight, the rest being glycerin.

The liquid fill itself will generally comprise from about 5 to about 15% by weight, and preferably, from about 7 to about 10% by weight of the final chewing gum piece itself.

The preferred liquid fill compositions in accordance with the present invention are as follows:

|  | Parts by weight |
|---|---|
| Glycerin (containing up to 2% bound up water) | 95 to 99.5 |
| Thickener | 5 to 0.80 |
| Optional sweetener | |
| sugar | 0 to 5.0 |
| sugar alcohol | 0 to 5.0 |
| artificial sweetener | 0 to 0.20 |

2

Flavors which are especially useful in the liquid fill comprise flavor oil, including acids such as adipic, succinic and fumaric acids, citrus oils such as lemon oil, orange oil, lime oil, grapefruit oil, fruit essences such as apple essence, pear essence, peach essence, strawberry essence, apricot essence, raspberry essence, cherry essence, plum essence, pineapple essence, as well as the following essential oils: peppermint oil, spearmint oil, mixtures of peppermint oil and spearmint oil, clove oil, bay oil, anise oil, eucalyptus oil, thyme oil, cedar leaf oil, cinnamonoil, oil of nutmeg, oil of sage, oil of bitter almonds, cassia oil, and methylsalicylate (oil of wintergreen). Various synthetic flavors, such as mixed fruit, may also be incorporated in the center fill.

As indicated, in addition to the glycerin, the liquid fill may include a natural sugar or non-sugar sweetener.

The term "natural sugar" includes one or more sugars or sugar containing material, or sugar alcohols, for example, monosaccharides of 5 or 6 carbon atoms, such as arabinose, xylose, ribose, glucose, mannose, galactose, fructose, dextrose, or sorbose or mixtures of two or more of the foregoing monosaccharides; disaccharides, for example, sucrose such as cane or beet sugar, lactose, maltose or cellobiose; polysaccharides, such as partially hydrolyzed starch, dextrin or corn syrup solids, or sugar alcohol, such as sorbitol, xylitol, mannitol or arabitol.

In addition, as mentioned hereinbefore, the glycerin may be employed together with an artificial or non-sugar sweetener or sugar substitute, such as sodium calcium or ammonium saccharin salts, dihydrochalcones, glycyrrhizin, dipotassium glycyrrhizin, glycyrrhizic acid ammonium salt, the sodium salt of cyclohexyl sulfamic acid, L-aspartyl-L-phenylalanine methyl ester, the potassium salt of 3,4-di-hydro-6-methyl-1,2,3-oxathiazine-4-one-2,2-dioxide (Acesulfame-K), as well as *Stevia rebaudiana* (Stevioside), *Richardella dulcifica* (Miracle Berry), *Dioscoreophyllum cumminsii* (Serendipity Berry), cyclamate salts, and the like, or mixtures of any two or more of the above.

The center-fill portion of the chewing gum of the invention may be prepared by adding the thickening agent, preferably carboxymethyl cellulose, in the form of a powder to glycerin (which may be of commercial grade), and mixing until the thickening agent is dispersed throughout the glycerin to form a pourable colloidal gel or colloidal dispersion. No water need be added; the thickener is not and need not be dissolved in water. The other ingredients, namely flavors and/or sweeteners, may be added to the glycerin before or after adding the thickening agent.

The chewing gum portion of the center-filled chewing gum of the invention may comprise conventional sugarless or sugar-containing chewing gums. Inasmuch as the glycerin-thickening agent containing liquid center fill described herein will preferably be sugar-free, the center fill is especially suitable for use in conjunction with sugar-free chewing gum. An example of a particularly preferred chewing gum for use herein which has good extrusion properties as well as long shelf-life and long-term flexibility includes gum base; and as a plasticizer-sweetener combination, a hydrogenated starch hydrolysate and a major amount of sorbitol, optionally one or more other sugar alcohols, such as mannitol or xylitol; optionally one or more additional sweetening agents, such as sugar and/or non-sugar sweeteners such as any of those described above; and optionally additional flavoring materials, one or more softeners, emulsifiers and/or filler. The preferred chewing gum itself does not require an aqueous plasticizer or syrup such as corn syrup, although such materials may be present, is desired.

The hydrogenated starch hydrolysates employed herein may include those disclosed in Reissue Patent No. 26,959 or U.S. Patent No. 3,556,811 as well as various hydrogenated glucose syrups and/or powders which contain sorbitol, hydrogenated disaccharides, hydrogenated tri- to hexa-saccharides, and hydrogenated higher polysaccharides, or mixtures of any two or more of the above.

The hydrogenated glucose syrups and or powders may be produced by catalytic hydrogenation of standard glucose syrups (acid and/or enzyme converted) to the point where all the glucose end groups of the saccharides are reduced to alcohols, that is, dextrose end groups to sorbitol end groups. In the case of hydrogenated glucose syrups, the total solids are made of from 4 to 30% sorbitol, from 5 to 65% hydrogenated disaccharides (that is, maltitol), from 15 to 75% tri- to hepta-hydrogenated saccharides, and from 10 to 65% hydrogenated saccharides higher than hepta.

The preferred chewing gum for use in forming the center-filled chewing gum of the present invention comprises a sugarless chewing gum wherein the hydrogenated starch hydrolysate is employed in combination with sorbitol powder, and optionally, liquid sorbitol, other sugar alcohols, such as mannitol and/or xylitol, and/or gum arabic. The hydrogenated starch hydrolysate will be employed in a weight ratio to the sorbitol powder of within the range of from 3:1 to 1:30, preferably from 0.9:1 to 0.1:1, and more preferably from 0.6:1 to 0.1:1. Such preferred sugarless compositions contain from 2 to 60% by weight of hydrogenated starch hydrolysate, and preferably from 2 to 20% by weight hydrogenated starch hydrolysate, and the sorbitol powder is present in an amount within the range of from 10 to 75%, and preferably from 10 to 65% by weight.

In one embodiment of the chewing gum, sorbitol syrup or solution may also be employed in a weight ratio of sorbitol powder: sorbitol solution of within the range of from 6:1 to 2:1.

In general, sorbitol syrup may be present in an amount to provide from 0 to 10% by weight sorbitol and preferably from about 1 to about 8% sorbitol based on the weight of the final chewing gums. Use of the sorbitol in the form of the syrup or solution increases moisture content and thus softness of the gum.

In another embodiment of the chewing gum, gum arabic, preferably in the form of a solution, is employed in combination with the hydrogenated starch hydrolysate and sorbitol powder to provide improved textural properties. The gum arabic will normally be employed as aqueous solutions containing from 30 to 60% gum arabic, so as to provide an amount of gum arabic of within the range of from 0 to 4%, and preferably from 1 to 3% by weight based on the weight of the chewing gum.

The chewing gum will also preferably include mannitol to provide improved sweetness, texture and processing. The mannitol will be present in an amount ranging from 0 to 20%, and preferably from 5 to 10% based on the weight of the chewing gum.

Where the above-described hydrogenated starch hydrolysate is employed in combination with the sorbitol and optionally mannitol and/or gum arabic, the resulting gum has been found to have a soft, pliable texture suprior to sugarless formulations containing no hydrogenated starch hydrolysate. In addition, such chewing gum composition, which usually will be of the non-sugar type, has good softness retention properties and improved flexibility as it ages on the shelf and has excellent extrusion properties.

The hydrogenated starch hydrolysate as described above may be employed as a substitute for corn syrup or other plasticizer or softener, sugar and even sugar alcohols. A typical sugar-free gum formulation may contain from 2 to 70%, and preferably from 4 to 60% by weight of the hydrogenated starch hydrolysate. Such formulations may include the hydrogenated starch hydrolysate in the form of a powder and/or aqueous syrup; where present, the syrup (2 to 25% hydrogenated starch hydrolysate) will be employed in a weight ratio to the powder of within the range of from 0.2:1 to 0.5:1, and preferably from 0.2:1 to 0.3:1. The use of the hydrogenated starch hydrolysate in syrup form, as in the case of the sugar alcohols, increases moisture content of the gum formulation and enhances softness properties thereof.

The hydrogenated starch hydrolysate preferably in the form of its syrup, may also be employed in bubble gum formulations to produce a soft, pliable product, the degree of softness being controllable by changing the amount of syrup employed. In the bubble gum formulations of the invention, the hydrogenated starch hydrolysate may be employed with or without sugar (which when present will provide from 10 to 90% by weight of the bubble gum formulation) or with artificial or non-sugar sweeteners as described herein.

The chewing gum will include a relatively water-insoluble, water-impenetrable gum base in an amount ranging from 8 to 50%, and preferably from 15 to 40% by weight of the chewing gum composition.

In general, the gum base is prepared by heating and blending various ingredients, such as, natural gum, synthetic resins, waxes, plasticizers, etc., in a manner well known in the art. Typical examples of the ingredients found in a chewing gum base are masticatory substances of vegetable origin, such as chicle, crown gum, nispero, rosidinha, jelutong, pendare, perillo, niger gutta, tunu, etc., masticatory substances of synthetic origin, such as butadiene-styrene polymer, isobutylene-isoprene copolymer, petroleum wax, polyethylene, polyisobutylene, polyvinylacetate, etc., plasticizers, such as lanolin, stearic acid, sodium stearate, potassium stearate, etc., antioxidants, such as butylated hydroxyanisole, butylated hydroxytoluene, and propyl gallate.

The water-insoluble gum base may consist of any conventional gum bases, such as disclosed for example in U.S. Patents Nos. 3,052,552 and 2,197,719.

The chewing gum may also include flavoring, such as sour or fruit flavoring or non-acid or mint flavoring in an amount ranging from 0.3 to 2.0% by weight, and preferably from 0.5 to 1.2% by weight of the final gum product. The flavoring may comprise synthetic flavors and oils derived from plants, leaves, flowers, fruit, etc. Representative flavor oils of the type described above with respect to the liquid center fill may also be employed in the chewing gum itself.

The chewing gum may contain a sugar sweetener or non-sugar sweetener as described above with respect to the center fill. Where present, the natural sugar or sugar alcohol may be employed in an amount ranging from 85 to 0.05% by weight of the gum.

The chewing gum may also contain conventional ester gums, polydextrose, fillers, such as calcium carbonate, and texturizers, such as hydrated alumina, plasticizers, softeners or emulsifiers, such as lecithin, fatty acids, glycerin, isomaltitol, glyceryl monostearate, hydrogenated vegetable oils, sorbitan monostearate, tallow, propylene glycol, F.D.&C. coloring agents, and other conventional chewing gum additives as will be apparent to those skilled in the art.

The chewing gum itself may be prepared employing conventional chewing gum manufacturing techniques. However, the various sweeteners and/or hydrogenated starch hydrolysate may be provided in a form to ensure relatively slow release or slow solubilization in the saliva. Thus, for example, the sweetener and/or hydrogenated starch hydrolysate may be coated with, integrated with or encapsulated with non-toxic water-insoluble polymeric substances such as polyvinyl esters disclosed in U.S. Patents Nos. 3,826,847 and 3,795,744, organic acids as disclosed in U.S. Patent No. 3,761,288, or other known edible materials as, for example, any of the fusing agents disclosed in U.S. Patent No. 3,928,633, as well as hydrophilic colloids such as ethyl cellulose, paraffin wax or sodium alginate. The sweetener and/or hydrogenated starch hydrolysate so-modified and employed in conjunction with conventional carriers as described above, will be slowly solubilized in the saliva over extended periods of time.

Alternatively, where it is desired to achieve slow release, non-sugar or artificial sweetener (where employed) will be in particulate form having an average particle size of below about 150 μm (0.150 mm or about 100 mesh), and will be incorporated into the gum base portion of the chewing gum. The particulate compound will be substantially retained in the gum base, and during chewing undergoes slow and controlled release into the saliva.

The preferred chewing gum for use in the present invention may be prepared by admixing melted gum base (heated at, for example, 71—77°C), softener, such as lecithin, and color, if desired, optionally adding polyol sweetener, such as mannitol, to the mix, and mixing for 2—5 minutes, adding hydrogenated starch hydrolysate alone or optionally with gum arabic and/or glycerin and mixing for 2 to 7 minutes, adding a portion of the sorbitol and a portion of the flavor while mixing for 2 to 5 minutes, and thereafter repeating the last step adding additional portions of sorbitol and flavor until all the sorbitol and flavor have been added, and then optionally adding spray-dried flavor and mixing the entire mass for 2 to 5 minutes.

The chewing gum portion for use in centerfill gum of the invention may also be prepared by mixing melted gum base (heat at, for example, 71—77°C) and color, adding about one-third of the hydrogenated starch hydrolysate and mixing for 1 to 3 minutes, if desired, adding polyol, such as mannitol, to the mix, and mixing for 1—5 minutes, adding sorbitol (in the form of powder), and softener, such as lecithin, flavor, and glycerin (where employed), and when a smooth mixture is obtained, optionally, adding sorbitol solution, then adding the remaining hydrogenated starch hydrolysate alone or with gum arabic, and then optionally adding spray-dried flavor and admixing the entire mass for 2 to 5 minutes.

If desired, the chewing gum formed by the above methods may be mixed with one or more easily extractable water-soluble sweeteners, such as natural sugar, soluble saccharin salts, aspartame, water-soluble food acid and/or flavors. The resulting mix is then formed into sticks or tablets of chewing gum employing conventional techniques.

Where, in the above method, it is desired to employ a soluble non-sugar sweetener in a chewing gum containing an aqueous plasticizer (such as the hydrogenated starch hydrolysate in syrup form), the soluble non-sugar sweetener will be added to the gum base ingredients before the aqueous plasticizer is added thereto. In this manner, the soluble non-sugar sweetener will be transferred to the gum base and will not be first dissolved in the plasticizer.

Regardless of the solubility of the non-sugar sweetener to be added, where long lasting flavor or sweetness is desired, whether it be the hydrogenated starch hydrolysate and/or other sweetener, it is preferred that the particules of non-sugar or artificial sweetener have an average particle size of less than 150 microns to ensure slow controlled release into the saliva.

Preferred sugarless chewing gums for use in accordance with the present invention wherein the hydrogenated starch hydrolysate is employed as a sugar substitute for bulking purposes will have the following compositions:

|  | Parts by weight |
|---|---|
| Gum base | 18—35 |
| Mannitol | 0—18 |
| Flavor | 0.5—2.5 |
| Sorbitol powder | 30—65 |
| Softener (e.g., lecithin) | 0.5—2 |
| Hydrogenated starch hydrolysate (on wet basis) | 3—20 |
| Gum arabic (based on 30—70% solution) | 0—12 |
| Glycerin | 0—4 |
| Sorbitol solution (based on 40 to 70% solution) | 0—25 |

**0 086 856**

Preferred sugarless chewing gum formulations for use in accordance with the present invention wherein hydrogenated starch hydrolysate is the sole binding agent and aid in processing are as follows:

|  | Parts by weight |
|---|---|
| Gum base | 20—35 |
| Mannitol | 6—18 |
| Flavor oil | 0.5—2.5 |
| Sorbitol powder | 30—55 |
| Softener (e.g., lecithin) | 0.5—2 |
| Hydrogenated starch hydrolysate (on wet basis) | 10—18 |
| Glycerin | 0—4 |

Preferred sugarless chewing gum formulations for use in accordance with the present invention wherein hydrogenated starch hydrolysate is employed in conjunction with gum arabic solutions to aid in extrusion are as follows:

|  | Parts by weight |
|---|---|
| Gum base | 18—30 |
| Mannitol | 0—10 |
| Flavor oil | 0.5—2.5 |
| Sorbitol powder | 40—65 |
| Softener (e.g., lecithin) | 0.5—2 |
| Gum arabic solution (40 to 60% gum arabic) | 4—10 |
| Hydrogenated starch hydrolysate (wet basis) | 5—12 |
| Glycerin | 1—4 |

Preferred sugarless chewing gums for use in accordance with the present invention wherein the hydrogenated starch hydrolysate is employed in conjunction with sorbitol solution (as plasticizer) will have the following compositions:

|  | Parts by weight |
|---|---|
| Gum base | 18—30 |
| Hydrogenated starch hydrolysate (wet basis) | 5—12 |
| Mannitol | 0—10 |
| Sorbitol powder | 40—60 |
| Sorbitol liquid (50 to 80% solution) | 10—20 |
| Glycerin | 0—4 |
| Softener (lecithin) | 0.5—2 |
| Flavor | 0.5—2.5 |

6

Preferred sugarless gum formulations for use in accordance with the present invention are as follows:

|  | Parts by weight |
| --- | --- |
| Gum base | 18—25 |
| Mannitol | 0—10 |
| Hydrogenated starch hydrolysate (wet basis) | 10—20 |
| Sorbitol powder | 40—60 |
| Softener (lecithin) | 0.5—1.5 |
| Glycerin | 1—3 |
| Flavor | 0.3—1.5 |

Again, the above sugarless chewing gum is particularly suitable for use in making liquid center chewing gum of the invention. However, other conventional sugar-containing or sugarless chewing gum compositions may be employed.

The center-filled chewing gum of the invention may be prepared as described in U.S. Patents Nos. 3,806,290 and 3,857,963.

The following Examples illustrate preferred embodiments of the present invention.

Example I

A. A center fill for chewing gum in accordance with the present invention is prepared by adding, with mixing, 0.454 kg of carboxymethyl cellulose 7HF (Hercules) to 44.9 kg of glycerin (commercial grade containing 2% water) to form a colloidal dispersion. Flavor oil is then added together with coloring to form the center fill.

B. A sugarless chewing gum is prepared from the following ingredients:

|  | Parts by weight |
| --- | --- |
| Gum base | 30 |
| Mannitol | 15 |
| Sorbitol powder | 40 |
| Hydrogenated starch hydrolysate syrup (78% solids, including 6% sorbitol and 56% maltitol) | 12 |
| Softener (lecithin) | 1 |
| Spearmint oil | 1 |
| Color | 0.1 |

The gum base is melted (71—79°C) and placed in a preheated standard dough mixer equipped with sigma blades. Lecithin and color are added and mixed for 4—5 minutes. Hydrogenated starch hydrolysate syrup is added and mixed for 4—5 minutes. Thereafter, about one-third of the sorbitol is slowly added followed immediately with one-third of the flavor and mixed for about 2—3 minutes. The last step is repeated until all sorbitol and flavor are added.

C. The center-filled gum formed from the above chewing gum portions and center fill is prepared employing the procedure outlined in U.S. Patent No. 3,857,963.

The center-filled chewing gum so-prepared is found to have excellent sweetness and flavor and a long shelf-life.

Examples II and III

Sugarless center-filled chewing gums are prepared from the following ingredients employing the procedure outlined in Example I except that 0.9 kg of carboxymethyl cellulose 7MF (Hercules) containing 2% bound up water is employed in place of the carboxymethyl cellulose 7HF, and in preparing the chewing gum portion glycerin is added directly after the hydrogenated starch hydrolysate.

| Gum portion | Parts by weight | |
| --- | --- | --- |
| | Ex. 2 | Ex. 3 |
| Gum base | 22 | 24 |
| Mannitol | 8 | 10 |
| Sorbitol powder | 50 | 47 |
| Hydrogenated starch syrup (on dry basis) | 16 | 15 |
| Glycerin | 2 | 2 |
| Lecithin | 0.5 | 0.5 |
| Fruit flavor | 1.5 | 0 |
| Spearmint flavor | 0 | 1.2 |
| Color | 0.05 | 0.1 |
| Center-fill portion Glycerin (2% portion) | 98 | 97 |
| Flavor oil | 0.2 | 0.5 |
| Carboxymethyl cellulose 7MF | 2.0 | 2.0 |

The Examples II and III chewing gums are found to have a pleasant sweet taste, good softness retention, improved flexibility properties and excellent extrusion properties, and excellent shelf-life.

Examples IV to VI

Center-filled sugarless chewing gums are prepared from the following ingredients:

| Chewing gum portion | Parts by weight | | |
| --- | --- | --- | --- |
| | Ex. 4 | Ex. 5 | Ex. 6 |
| Gum base | 22 | 22 | 22 |
| Sorbitol powder | 54 | 48 | 47 |
| Sorbitol solution (70%) | 13 | 12 | 12 |
| Hydrogenated starch hydrolysate syrup (dry basis) | 8.5 | 8 | 10 |
| Mannitol | — | 8 | 5 |
| Lecithin | 0.5 | 0.5 | 0.5 |
| Flavor | 1.7 | 1.6 | 1.2 |
| Color | 0.07 | 0.05 | 0.1 |
| Glycerin | — | — | 2 |
| Center-fill portion Glycerin | 98 | 97 | 97 |
| Flavor oil | 0.2 | 0.3 | 0.2 |
| Carboxymethyl cellulose 7HF | 1.2 | 1.5 | 1.0 |

A procedure similar to that described in Examples I to III is employed except that sorbitol solution and color are added after the hydrogenated starch hydrolysate.

The above chewing gum is found to have properties similar to that of the Examples I to III gums.

Example VII

The chewing gum portion of the center-filled sugarless chewing gum is prepared from the following ingredients:

| Chewing gum portion | Parts by weight |
| --- | --- |
| Gum base | 30 |
| Sorbitol powder | 40 |
| Hydrogenated starch hydrolysate syrup (56% solids, including 6% sorbitol and 56% maltitol) | 12 |
| Softener (lecithin) | 1 |
| Spearmint oil | 1 |
| Color | 0.1 |
| Mannitol | 15 |
| Center-fill portion Glycerin | 98 |
| Carboxymethyl cellulose 7MF | 2 |

The gum base is melted (71—79°C) and placed in a pre-heated standard dough mixer equipped with sigma blades. Color is added and mixed for 3—4 minutes. About one-third of the hydrogenated starch hydrolysate syrup is added and mixed for 1—3 minutes. Mannitol is added and mixed for 1—2 minutes. Thereafter, the sorbitol is slowly added followed immediately with lecithin and flavor and mixed for about 2—3 minutes. The remaining hydrogenated starch hydrolysate is added and the mixture mixed for 2—5 minutes.

The above chewing gum together with the center-fill composition as described in Example I are employed to form a center-filled chewing gum which is found to have a pleasant sweet taste, good softness retention and improved flexibility properties upon aging and excellent extrusion properties, and excellent shelf-life.

Examples VIII and IX

Sugarless center-filled chewing gums are prepared from the following ingredients employing the procedure outlined in Example VII except that glycerin is added directly after the sorbitol powder in the chewing gum portion.

| Chewing gum portion | Parts by weight | |
| --- | --- | --- |
| | Ex. 8 | Ex. 9 |
| Gum base | 22 | 24 |
| Mannitol | 8 | 10 |
| Sorbitol powder | 50 | 47 |
| Hydrogenated starch hydrolysate syrup (on dry basis) | 16 | 15 |
| Glycerin | 2 | 2 |
| Lecithin | 0.5 | 0.5 |
| Fruit flavor | 1.5 | 0 |
| Spearmint flavor | 0 | 1.2 |
| Color | 0.05 | 0.1 |
| Center-fill formulation Glycerin | 97 | 97 |
| Carboxymethyl cellulose 7MF | 2 | 2 |
| Flavor | 0.25 | 0.5 |
| Sweetener | 0.10 | 0.2 |

The Examples VIII and IX center-filled chewing gums are found to have a pleasant sweet taste, good softness retention, improved flexibility properties and excellent extrusion properties.

Examples X to XII

Sugarless center-filled bubble gums are prepared from the following ingredients:

| Chewing gum portion | Parts by weight | | |
| --- | --- | --- | --- |
| | Ex. 10 | Ex. 11 | Ex. 12 |
| Bubble gum base | 22 | 26 | 26 |
| Sorbitol powder | 57 | 49 | 49 |
| Hydrogenated starch hydrolysate syrup | 15 | 18 | 18 |
| Mannitol | 5 | 5 | 5 |
| Lecithin | 0.2 | 0.3 | — |
| Flavor | 0.7 | 1.5 | 1.5 |
| Center-filled portion Glycerin | 98 | 98 | 98 |
| Carboxymethyl cellulose 7HF | 1 | 1 | 1 |
| Pectin | 0.5 | 0.8 | 0.6 |
| Gum tragacanth | 0 | 0.2 | 0.3 |

A procedure similar to that described in Examples I to VI is employed in preparing the above bubble gums.

The above bubble gums are found to have a pleasant sweet taste, excellent softness retention, and improved flexibility and extrusion properties.

**0 086 856**

**Claims**

1. A center-filled chewing gum having improved softness retention, flexibility, and excellent shelf-life comprising a chewing gum piece including an enclosed cavity therein, and a liquid fill in said cavity, said liquid fill comprising glycerin as a sweetener and a thickener to increase viscosity of the glycerin, characterized in that the glycerin is present in the liquid fill in an amount of from 94 to 99.5% by weight and said thickener is present in the liquid fill in an amount of from 0.5 to 6% by weight.

2. The center-filled chewing gum as defined in Claim 1 wherein said glycerin is present in an amount within the range of from 95 to 99% by weight of said liquid fill.

3. The center-filled chewing gum as defined in Claim 1 or 2 wherein said thickener is a natural or synthetic gum.

4. The center-filled chewing gum as defined in Claim 3 wherein said thickener is carboxymethyl cellulose, a pectin, an alginate, agar or gum tragacanth.

5. The center-filled chewing gum as defined in any of Claims 1 to 4 wherein said chewing gum piece is formed of sugarless chewing gum.

6. The center-filled chewing gum as defined in Claim 1 or 2 wherein said thickener is carboxymethyl cellulose or sodium carboxymethyl cellulose present in an amount of from 1 to 3% by weight of the center fill.

7. The center-filled chewing gum as defined in any of Claims 1 to 6 wherein said glycerin contains up to about 2% by weight bound-up water.

8. The center-filled chewing gum as defined in any of Claims 1 to 7 further including one or more flavors and artifical sweeteners.

9. A sugarless liquid fill for center-filled chewing gum, said liquid fill comprising from 94.0 to 99.5% by weight glycerin and from 0.5 to 6% by weight of a thickener.

10. A sugarless liquid fill as defined in Claim 9 wherein said thickener comprises carboxymethyl cellulose or sodium carboxymethyl cellulose.

11. The center-filled chewing gum as defined in any of Claims 1 to 8 wherein the glycerin in the liquid fill contains as an additional sweetener 2 to 15% by weight of a sugar, 5 to 30% by weight of a sugar alcohol or 0.05 to 0.35% by weight of an artificial sweetener, the rest being glycerin.

12. A process for preparing a center-filled chewing gum as defined in Claim 1, which comprises adding a thickener to glycerin to form a center fill and incorporating the center fill into the cavity of said chewing gum piece.

13. The process as defined in Claim 12 wherein said thickener is carboxymethyl cellulose or sodium carboxymethyl cellulose.

14. The process as defined in Claim 12 or 13 wherein said glycerin comprises 95 to 99% of said center fill and said thickener comprises 1 to 5% of said center fill.


**Patentansprüche**

1. Ein im Zentrum gefülltes Kaugummi mit einer verbesserten Weichheitsbeibehaltung, Flexibilität und ausgezeichneter Lagerfähigkeit, umfassend einen Kaugummiabschnitt mit einer darin befindlichen Aushöhlung und einer flüssigen Füllung in der Aushöhlung, wobei die flüssige Füllung Glycerin als Süssungsmittel und einen Verdicker zur Erhöhung der Viskosität des Glycerins umfasst, dadurch gekennzeichnet, dass das Glycerin in der flüssigen Füllung in einer Menge von 94 bis 99,5 Gew.% und der Verdicker in der flüssigen Füllung in einer Menge von 0,5 bis 6 Gew.% vorliegt.

2. Ein im Zentrum gefülltes Kaugummi gemäss Anspruch 1, worin das Glycerin in einer Menge im Bereich von 95 bis 99 Gew.%, bezogen auf die flüssige Füllung, vorliegt.

3. Ein im Zentrum gefülltes Kaugummi gemäss Anspruch 1 oder 2, worin der Verdicker ein natürliches oder synthetisches Harz ist.

4. Ein im Zentrum gefülltes Kaugummi gemäss Anspruch 3, worin der Verdicker Carboxymethylcellulose, ein Pectin, ein Alginat, Agar oder Tragacanthharz ist.

5. Ein im Zentrum gefülltes Kaugummi gemäss einem der Ansprüche 1 bis 4, worin der Kaugummiabschnitt als zuckerfreies Kaugummi ausgebildet ist.

6. Ein im Zentrum gefülltes Kaugummi gemäss Anspruch 1 oder 2, worin der Verdicker Carboxymethylcellulose oder Natriumcarboxymethylcellulose in einer Menge von 1 bis 3 Gew.% der Füllung im Zentrum ist.

7. Ein im Zentrum gefülltes Kaugummi gemäss einem der Ansprüche 1 bis 6, worin das Glycerin bis zu etwa 2 Gew.% gebundenes Wasser enthält.

8. Ein im Zentrum gefülltes Kaugummi gemäss einem der Ansprüche 1 bis 7, welches weiterhin einen oder mehrere Geschmacksstoffe und künstliche Süssungsmittel einschliesst.

9. Zuckerfreie flüssige Füllung für ein im Zentrum gefülltes Kaugummi, worin die flüssige Füllung aus 94,0 bis 99,5 Gew.% Glycerin und 0,5 bis 6 Gew.% eines Verdickungsmittels besteht.

10. Zuckerfreie flüssige Füllung gemäss Anspruch 9, worin der Verdicker Carboxymethylcellulose oder Natriumcarboxymethylcellulose umfasst.

11. Ein im Zentrum gefülltes Kaugummi gemäss einem der Ansprüche 1 bis 8, worin das Glycerin in

11

der flüssigen Füllung als ein zusätzliches Süssungsmittel 2 bis 15 Gew.% Zucker, 5 bis 30 Gew.% eines Zuckeralkohols oder 0,05 bis 0,35 Gew.% eines künstlichen Süssungsmittels, Rest Glycerin, enthält.

12. Verfahren zur Herstellung eines im Zentrum gefüllten Kaugummis gemäss Anspruch 1, dadurch gekennzeichnet, dass man einen Verdicker zu Glycerin unter Ausbildung der Füllung für das Zentrum gibt und die Füllung für das Zentrum in die Aushöhlung in den Kaugummiabschnitt inkorporiert.

13. Verfahren gemäss Anspruch 12, dadurch gekennzeichnet, dass das Verdickungsmittel Carboxymethylcellulose oder Natriumcarboxymethylcellulose ist.

14. Verfahren gemäss Anspruch 12 oder 13, dadurch gekennzeichnet, dass das Glycerin 95 bis 99% der Füllung für das Zentrum und der Verdicker 1 bis 5% der Füllung für das Zentrum ausmacht.

**Revendications**

1. Un chewing-gum fourré présentant une amélioration de la conservation de la tendreté, de la flexibilité et une excellente durée de conservation, comprenant une portion de chewing-gum entourant une cavité close avec une garniture liquide dans ladite cavité, ladite garniture liquide comprenant de la glycérine comme édulcorant et un épaississant pour accroître la viscosité de la glycérine, caractérisé en ce que la glycérine est présente dans la garniture liquide en une quantité de 94 à 99,5% en poids et ledit épaississant est présent dans la garniture liquide en une quantité de 0,5 à 6% en poids.

2. Le chewing-gum fourré comme défini dans la revendication 1, dans lequel ladite glycérine est présente en une quantité comprise dans la gamme de 95 à 99% du poids de ladite garniture liquide.

3. Le chewing-gum fourré comme défini dans la revendication 1 ou 2, dans lequel ledit épaississant est une gomme naturelle ou synthétique.

4. Le chewing-gum fourré comme défini dans la revendication 3, dans lequel ledit épaississant est la carboxyméthylcellulose, une pectine, un alginate, le gélose ou la gomme adragante.

5. Le chewing-gum fourré comme défini dans l'une quelconque des revendications 1 à 4, dans lequel ladite portion de chewing-gum est formée d'un chewing-gum sans sucre.

6. Le chewing-gum fourré comme défini dans la revendication 1 ou 2, dans lequel ledit épaississant est la carboxyméthylcellulose ou la carboxyméthylcellulose sodique présente en une quantité de 1 à 3% du poids de la garniture centrale.

7. Le chewing-gum fourré comme défini dans l'une quelconque des revendications 1 à 6, dans lequel ladite glycérine contient jusqu'à environ 2% en poids d'eau liée.

8. Le chewing-gum fourré comme défini dans l'une quelconque des revendications 1 à 7 comprenant de plus un ou plusieurs arômes et édulcorants artificiels.

9. Une garniture liquide sans sucre pour chewing-gum fourré, ladite garniture comprenant de 94,0 à 99,5% en poids de glycérine et de 0,5 à 6% en poids d'un épaississant.

10. Une garniture liquide sans sucre comme défini dans la revendication 9, dans laquelle ledit épaississant comprend de la carboxyméthylcellulose ou de la carboxyméthylcellulose sodique.

11. Le chewing-gum fourré comme défini dans l'une quelconque des revendications 1 à 8, dans lequel la glycérine de la garniture liquide contient comme édulcorant additionnel 2 à 15% en poids d'un sucre, 5 à 30% en poids d'un polyalcool à caractère glucidique ou 0,05 à 0,35% en poids d'un édulcorant artificiel, le reste étant de la glycérine.

12. Un procédé pour la préparation d'un chewing-gum fourré comme défini dans la revendication 1 qui comprend l'addition d'un épaississant à la glycérine pour former une garniture centrale et l'incorporation de la garniture centrale dans la cavité de ladite portion de chewing-gum.

13. Le procédé comme défini dans la revendication 12, dans lequel ledit épaississant est la carboxyméthylcellulose ou la carboxyméthylcellulose sodique.

14. Le procédé comme défini dans la revendication 12 ou 13, dans lequel ladite glycérine constitue 95 à 99% de ladite garniture centrale et ledit épaississant constitue 1 à 5% de ladite garniture centrale.